(19) Europäisches Patentamt
European Patent Office
Office européen des brevets

(11) **EP 4 575 700 A1**

(12) **EUROPEAN PATENT APPLICATION**

(43) Date of publication:
**25.06.2025 Bulletin 2025/26**

(21) Application number: **23217553.9**

(22) Date of filing: **18.12.2023**

(51) International Patent Classification (IPC):
***G05D 1/689*** (2024.01)    ***G05D 1/229*** (2024.01)
***G05D 1/646*** (2024.01)    ***G05D 1/46*** (2024.01)

(52) Cooperative Patent Classification (CPC):
**G05D 1/46; G05D 1/229; G05D 1/646; G05D 1/689;**
G05D 2109/254

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **UM Autonomous Systems Limited
London Greater London EC2A 4NE (GB)**

(72) Inventor: **BARAN, Robin
08005 Barcelona (ES)**

(74) Representative: **Carlos Hernando, Borja
Garrigues IP, S.L.P.
Plaza de Colón, 2
28046 Madrid (ES)**

(54) **A METHOD, SYSTEM AND COMPUTER PROGRAMS FOR CONTROLLING MULTICOPTER DRONES**

(57)    A method, system and computer programs for controlling multicopter drones are provided. The method comprises performing by one or more processors the following steps: selecting a lookahead point to a multicopter drone on a given 3D path; computing an angular yaw velocity command using a given yaw input; computing linear horizontal and vertical velocity commands given horizontal and vertical distances to the selected lookahead point and a desired cruise velocity; creating an arc going from the multicopter drone to the selected lookahead point by combining the computed angular yaw velocity command with the computed linear horizontal and vertical velocity commands, and computing a velocity vector command using the created arc; and refining the computed velocity vector command based on previous computed velocity commands and an allowed maximum acceleration.

**Fig. 1**

**Description**

<u>Technical Field</u>

The present invention relates generally to the field of flight control systems for unmanned aircrafts and specifically to path follower controllers for multicopter drones (i.e. multi-rotor and single-rotor drones).

<u>Background of the Invention</u>

Controlling the flight of multicopter drones using traditional pure-pursuit controllers has encountered several limitations. These controllers are primarily designed for twodimensional (2D) path tracking on flat surfaces, restricting their application in three-dimensional (3D) space.

Very few pure-pursuit controllers for unmanned aircraft exist. They are usually designed to encompass the whole control pipeline of a specific aircraft type and directly output thrust and angular rate commands. For multicopter drone operation, a cascading controller approach with a path follower controller sending body velocity commands to a proprietary low-level controller unique to each drone is often used. This approach offers greater adaptability to different drone models, but no such pure-pursuit controller exists.

Furthermore, traditional pure-pursuit controllers lack independent yaw control, and the heading is dependent on the path heading. In many multicopter drone applications, it is crucial to control the drone's heading to adjust the camera and sensors perspective. In aerial photography and videography applications, the heading needs to be controlled to adjust the camera's perspective to focus on specific points of interest. In mapping and surveying applications, precise control of the drone's orientation is required to ensure consistent image overlap between consecutive flight paths.

Additionally, multicopter are flying at a wide range of velocity. Traditional pure-pursuit controllers have difficulties adapting to varying velocities without re-tuning and are often less efficient at high speed. Some pure-pursuit controllers attempt to address these issues by using a dynamic lookahead distance based on current velocity. In addition, they also try to improve performances at high speed by using additional heuristic constraints to regulate the velocity command based on the curvature of the path. However, even if those heuristics are working for a specific velocity, they are static parameters that often cannot work in a wide range of velocities without being tuned again. Moreover, no controller includes those features for 3D path and according to the specific dynamics of multicopter drones.

<u>Description of the Invention</u>

There is a need for a path follower controller for drones that includes the necessary features of multicopter drone operation. Therefore, it is an object of the present invention to provide a path follower controller using pure-pursuit algorithm with those required features to be used with drones, in particular with multicopter drones.

The controller introduces advancements to traditional pure-pursuit techniques, enabling precise 3D path following within an extended velocity range. Key features include (1) a path discretization algorithm to select a lookahead point on a 3D path, (2) independent yaw control loop and combined yaw input with linear velocity commands, (3) refined velocity commands using heuristics based on multicopter dynamics and capabilities to cover multicopter velocity range. By addressing the limitations of existing controllers, the invention provides improved motion control and enhanced path following capabilities for drones and is specifically tailored for multicopter drone commercial applications

To that end, embodiments of the present invention provide, according to one aspect, a method for controlling multicopter drones, including both multi-rotor and single-rotor drones. The method comprises performing by one or more processors the following steps: selecting a lookahead point to a multicopter drone on a given 3D path; computing an angular yaw velocity command using a given yaw input; computing linear horizontal and vertical velocity commands given horizontal and vertical distances to the selected lookahead point and a desired cruise velocity; creating an arc going from the multicopter drone to the selected lookahead point by combining the computed angular yaw velocity command with the computed linear horizontal and vertical velocity commands, and computing a velocity vector command using the created arc; and refining the computed velocity vector command based on previous computed velocity commands and an allowed maximum acceleration.

In some embodiments, the selecting step is done by relying on a dynamic lookahead distance and by discretizing and pruning the given 3D path.

In some embodiments, the lookahead point is selected by computing a lookahead radius using a velocity of the multicopter drone and a lookahead time parameter, and by looking if all the points of the discretized and pruned 3D path are out of the computed lookahead radius, if so, the first point of the pruned path is used as lookahead point $p_{lookahead}$, otherwise, the first point that is out of the lookahead radius is looked for. Moreover, if no point is out of the lookahead radius, the last point of the discretized and pruned 3D path is used as lookahead point, if the first point out of lookahead radius is not the first one of the discretized and pruned 3D path, an intersection point of a lookahead sphere with a segment formed by the intersection point and the previous point is used as lookahead, or if the first point out of lookahead radius is the first one of the discretized and pruned 3D path, it is used as lookahead point.

In some embodiments, the method also comprises projecting the created arc onto a 3D cylinder.

In some embodiments, the given yaw input comprises a yaw setpoint and a given gain parameter, the yaw setpoint being obtained from an external source or comprising a point of interest.

In some embodiments, the method also comprises defining a first rotated frame $R_B$ using an angle a between a velocity vector in a xy plane, and transforming the selected lookahead point to the defined first rotated frame $R_B$.

Alternatively or complementarily, an angle $\beta$ can also be used to define a second rotated frame $R_C$ around a y-axis. In this case, the selected lookahead point can be transformed to the defined second rotated frame $R_C$. In some embodiments, the method can also create a 3D arc from the multicopter drone to this transformed lookahead point, and the computed velocity vector command can be penalized based on the radius of a sphere derived from the created 3D arc. Particularly, this radius is variable/dynamic and depends on the desired cruise velocity. This allows the present invention to be used on a wide range of velocity.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, the present invention provides a path follower controller method and system adapted to multicopter drone operation that is able to (1) make a multicopter drone follow a 3D path; (2) while orienting the multicopter drone according to an independent yaw input, and (3) able work on a wide velocity range by using heuristic constraints respecting multicopter dynamics.

Brief Description of the Drawings

The previous and other advantages and features will be more fully understood from the following detailed description of embodiments, with reference to the attached figures, which must be considered in an illustrative and non-limiting manner, in which:

Fig. 1 is a schematic block diagram including the inputs and outputs and illustrating the main modules and control loops of the three-dimensional pure-pursuit path follower with independent yaw controller for multicopter drones.

Fig. 2 is the same schematic block diagram as Fig. 1 but using the mathematical notations that are used throughout this document.

Fig. 3 is a set of explanatory schematics for the selection process of the first point for pruning the path input of the three-dimensional pure-pursuit path follower.

Fig. 4 is a logic graph resuming the lookahead point selection logic from a pruned path input.

Fig. 5 is a schematic illustrating the lookahead sphere and path segment intersection process used to discretize the path when selecting the lookahead point from the pruned path.

Fig. 6 is a schematic illustrating the augmentation of the path-follower 2D arc to an arc projected on a 3D cylinder in order to adapt the path-follower logic to multicopter drones where 3D motion is required but only yaw angle is controllable.

Fig. 7 is a schematic to represent the different values used to scale the horizontal and vertical velocity commands relative to each other and in relation to the drone position and lookahead point position.

Fig. 8 is a schematic illustrating the process of rotating the drone frame around the z-axis the align the frame with the direction of motion to compute the motion arc to the lookahead point.

Fig. 9 is a schematic used to illustrate the geometry of finding the center of an arc of a given radius going from the drone position to the lookahead point in 2D.

Fig. 10 is a schematic illustrating the process of finding a velocity vector of a given norm that is tangent to the arc going from the drone position to lookahead point in 2D.

Fig. 11 is a set of schematics explaining the two rotations used to align the drone frame with the direction of motion in 3D.

Fig. 12 is a schematic illustrating the rotated frame of the drone, aligned with the direction of motion in 3D, and used to compute the curvature of the 3D arc to the lookahead point for regulating the velocity command.

Detailed Description of the Invention and of Preferred Embodiments

Present invention provides a novel three-dimensional (3D) path follower controller particularly tailored for multicopter drones. By extending the capabilities of the traditional pure-pursuit controller, the invention enables 3D path following within an extended velocity range. The invention incorporates vital features essential for multicopter drone operation, including independent yaw control and precise motion at high velocities. To ensure smooth and accurate motion, it uses a dynamic lookahead distance and applies heuristic constraints based on path curvature and drone velocity to regulate velocity commands. Additionally, velocity commands are further refined considering the multicopter's maximum velocity and acceleration, resulting in improved performance.

Particularly, present invention is based on the theory of adaptive pure-pursuit controllers and adapts it for the specificity of multicopter drones. Firstly, the invention logic extends the classic 2D pure-pursuit controller to work in 3D in a way that fits multicopter dynamics. When using body frame velocity input to control a multicopter drone, only 3D linear velocity and angular yaw velocity can be inputted because roll and pitch angles are not controllable. In addition, classic pure-pursuit control algorithms require the heading to be constrained and dependent on following the arc from the drone to the lookahead point. The present invention uses an extended logic to allow for multicopter drones (and any holonomic robot) to be able to follow a yaw input command while following a given path. Finally, the present invention extends the existing heuristic constraints used in some pure-pursuit controllers to work in 3D. Some pure-pursuit controllers have been using the curvature of the arc going from the drone to the lookahead point to penalize velocity when the radius of the arc is smaller than a previously defined radius. The present invention extends the logic by using the curvature of a 3D arc and the radius of the sphere derived from this arc to penalize velocity. In addition, the minimum arc radius is made dynamic and dependent on the desired cruise velocity.

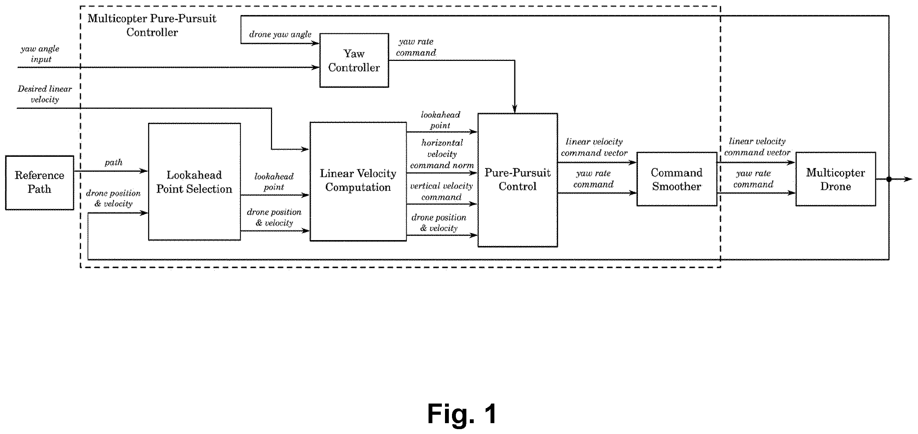

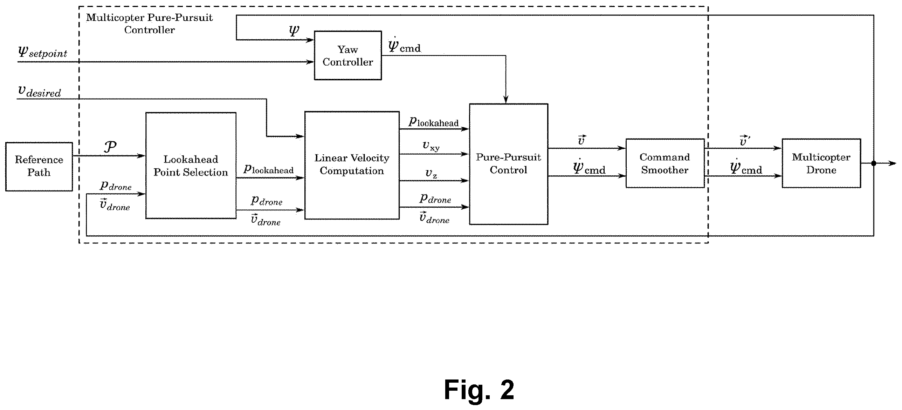

A schematic view of the controller is given in Figs. 1 and 2, that, according to an embodiment, works by (1) finding a lookahead point on a given 3D paths (in the Lookahead Point Selection block), (2) computing an angular yaw velocity command given a yaw input (in the Yaw Controller block), (3) computing the linear horizontal and vertical velocity commands given the horizontal and vertical distances to the lookahead point and the desired cruise velocity (in the Linear Velocity Computation block), (4) combining both linear and angular velocity to find an arc going from the drone position to the lookahead point, and using this arc to compute a velocity vector command in drone body frame (in the Pure-Pursuit Control block), and (5) refining the velocity command based on previous command and allowed maximum acceleration (in the Command Smoother block).

Path processing

Before being able to use the path, in some embodiments, the path needs to be transformed into the drone frame of reference and pruned from the closest point. This process is carried out by the Lookahead Point Selection block illustrated in Figs.1 and 2.

Let's consider a path $\mathcal{P}$ containing a number n of points. $\mathcal{P} = \{p_0, p_1, \ldots, p_n\}$ where $p_i = (x_i, y_i, z_i) \in \mathcal{P}$. The pruning procedure may go as follow:

1. Closest point $p_i$ to the drone is found using the distance $dist(p_i) = \sqrt{(x - x_i)^2 + (y - y_i)^2 + (z - z_i)^2}$ where the drone position is $p = (x, y, z)$

2. If a previous point $p_{i-1}$ exists, find the point A on the segment formed by $\overline{p_i p_{i-1}}$ that is closest to the drone if it exists. To exist, point A needs to respect two constraints. First, the segment formed by the drone to the point must be perpendicular to the segment formed by $\overline{p_i p_{i-1}}$, i.e., the dot product of both segments should be null. In addition, the point is A is on the segment $\overline{p_i p_{i-1}}$ and not only the line formed by $\overline{p_i p_{i-1}}$ if there is a scalar $u_A$ between 0 and 1 such that

$$A = u_A * \overline{p_i p_{i-1}}$$

$$\begin{cases} \overline{pA} \cdot \overline{p_i p_{i-1}} = 0 \\ A = u_A * \overline{p_i p_{i-1}} \ with \ 0 \leqslant u_A \leqslant 1 \end{cases}$$

and therefor

$$u_A = \frac{(x-x_i)*(x_{i-1}-x_i)+(y-y_i)*(y_{i-1}-y_i)+(z-z_i)*(z_{i-1}-z_i)}{(x_{i-1}-x_i)^2+(y_{i-1}-y_i)^2+(z_{i-1}-z_i)^2}.$$

The point exist if $0 \leq u_A \leq 1$

3. If a next point $p_{i+1}$ exists, find the point B on the segment formed by $\overline{p_i p_{i+1}}$ that is closest to the drone if it exists. The same logic as for point A is used to find point B.

$$\begin{cases} \overline{pB} \cdot \overline{p_i p_{i+1}} = 0 \\ B = u_B * \overline{p_i p_{i+1}} \ with \ 0 \leqslant u_B \leqslant 1 \end{cases}$$

and therefor

$$u_B = \frac{(x-x_i)*(x_{i+1}-x_i)+(y-y_i)*(y_{i+1}-y_i)+(z-z_i)*(z_{i+1}-z_i)}{(x_{i+1}-x_i)^2+(y_{i+1}-y_i)^2+(z_{i+1}-z_i)^2}.$$

The point exist if $0 \leq u_B \leq 1$

4. If either only A or only B exists, choose it as the starting point for pruning.

5. If both A and B were found, choose the closest one to the drone as the starting point for pruning.

6. If neither A nor B were found, choose $p_i$ as the starting point for pruning.

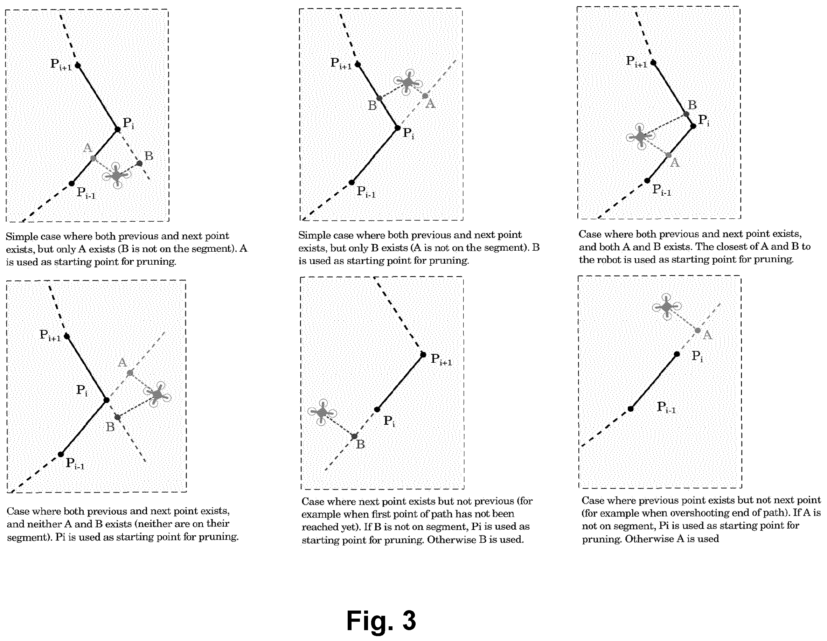

This allows covering all the following cases. In addition, whatever the granularity of the path is, the actual closest point on the path is returned by discretizing the segment. An illustration of the process is given in Fig. 3.

Selection of lookahead point

In an embodiment, the selection process of the lookahead point on the previously discretized and pruned path is as follows:

1. Determine the lookahead radius $L$ according to the drone current velocity $\vec{v}_{drone} = (\dot{x}, \dot{y}, \dot{z})$ and the lookahead time parameter $t_{lookahead}$.

$$L = \sqrt{(\dot{x}^2 + \dot{y}^2 + \dot{z}^2)} * t_{lookahead}$$

The lookahead radius is further constrained to be between the maximum lookahead radius $L_{max}$ and minimum lookahead radius $L_{min}$ set as parameters.

$$L_{clamped} = max\left(L_{min}, min(L, L_{max})\right)$$

2. Look if all the points of the pruned path $\mathcal{P}_p = \{p_0, p_1, \ldots, p_n\}$ are out of the lookahead radius. It is done by checking if the first point of the path is out of lookahead radius or not. Since the path has already been pruned to start from the closest point to the drone, if the first point is outside of the lookahead radius, all consecutive points of the path will be out too.

Distance from the point $p_i = (x_i, y_i, z_i) \in \mathcal{P}_p$ to the drone is given by $dist(p_i) = \sqrt{(x - x_i)^2 + (y - y_i)^2 + (z - z_i)^2}$ where the drone position is $p = (x,y,z)$.

1. If so, use the first point of the pruned path as lookahead point $p_{lookahead}$. $p_0 = p_{lookahead}$ if $dist(p_0) > L$

3. Otherwise, look for the first point that is out of the lookahead radius.

$$p_{out} = p_i \text{ if } \begin{cases} dist(p_{i-1}) < L \\ dist(p_i) \geq L \end{cases}$$

1. If no point is out of the lookahead radius, use the last point of the pruned path as lookahead point. This is a situation that can be encountered when the drone reaches the end of the path.

$$p_{lookahead} = p_n$$

2. If the first point out of lookahead radius is not the first one of the pruned path, use intersection of the lookahead sphere with the segment formed by this point and the previous point as lookahead. This is done to have the lookahead point to be at a lookahead distance from the drone when possible. The process for getting the lookahead sphere and segment intersection is explained in a further section of the document.

$$p_{lookahead} = intersec\left(sphere\left(L_{t_{clamped}}\right), \overline{p_{i-1}p_i}\right)$$

3. If the first point out of lookahead radius is the first one of the pruned path, use it directly as lookahead point. This is the situation that will be encountered when the drone has not reached the first point of the path yet.

$$p_{lookahead} = p_0$$

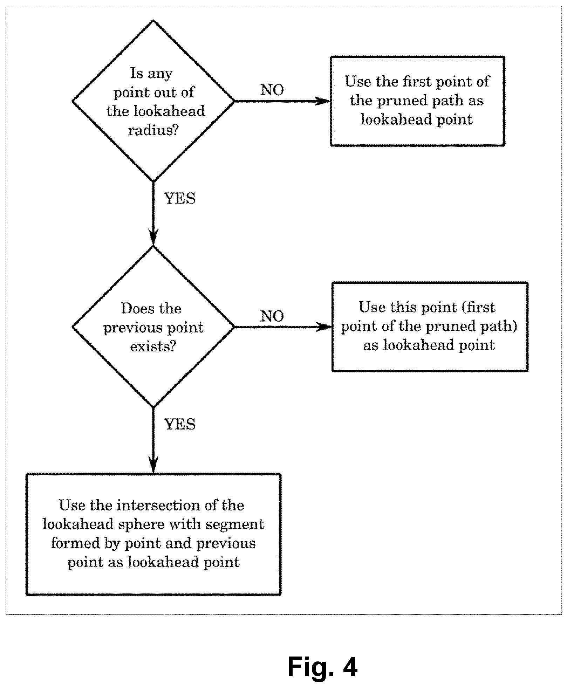

The selection process of the lookahead point is resumed in the graph of Fig. 4.

<u>Lookahead sphere intersection</u>

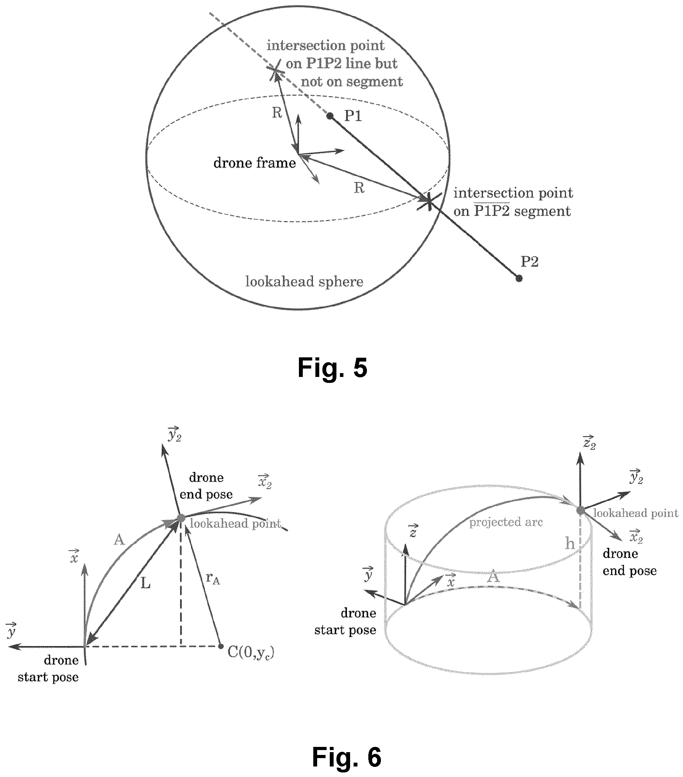

In some embodiments, another adaptation required for going from the 2D controller to a 3D controller is the use of a lookahead sphere instead of a lookahead circle when interpolating the lookahead point on a segment. The intersection point of the sphere and segment is obtained by first looking for the intersecting points between the sphere and the line defined by the segment, and then refining to only get the points on the segment, as shown in Fig. 5.
The segment $P_1P_2$ is formed by the point $P_1 = (x_1, y_1, z_1)$ and $P_2 = (x_2, y_2, z_2)$.
The intersection point $P = (x, y, z)$ is on the segment $\overline{P_1P_2}$ and is defined by the following equations, where $u$ is a scalar between 0 and 1:

$$\begin{cases} x = x_1 + u * (x_2 - x_1) \\ y = y_1 + u * (y_2 - y_1) \\ z = z_1 + u * (z_2 - z_1) \\ d_x = (x_2 - x_1) \\ d_y = (y_2 - y_1) \\ d_z = (z_2 - z_1) \\ 0 \leq u \leq 1 \end{cases}$$

The point $P = (x, y, z)$ is also at a distance of a radius $R$ to the center of the lookahead sphere:

$$R^2 = x^2 + y^2 + z^2$$

$$d_r = \sqrt{\left(d_x{}^2 + d_y{}^2 + d_z{}^2\right)} <=> d_r{}^2 = (x_2 - x_1)^2 + (y_2 - y_1)^2 + (z_2 - z_1)^2$$

By replacing x, y and z in the above equation, a quadratic form equation is obtained and can be solved for u.

$$a * u^2 + b * u + c = 0,$$

with:

$$\begin{cases} a = d_x{}^2 + d_y{}^2 + d_z{}^2 \\ b = 2 * x_1 * d_x + 2 * y_1 * d_y + 2 * z_1 * d_z \\ c = x_1{}^2 + y_1{}^2 + z_1{}^2 - R^2 \end{cases}$$

The intersection between the line and the segment can be two points, one point on none. This is reflected by the result of the quadratic equation.

$$\Delta = b^2 - 4 * a * c,$$

where:

If $\Delta < 0$, there is no intersecting point. Because the way the segment is chosen this case should not happen and the controller will return an error if it occurs for an undefined reason.

If $\Delta = 0$, there is only one point intersecting the sphere and the value of u is:

$$\Delta = 0, u = \frac{-b}{2*a}.$$

If $\Delta > 0$, there are two points, the values of u are:

$$\Delta > 0, \begin{cases} u_1 = \dfrac{-b - \sqrt{\Delta}}{2 * a} \\ u_2 = \dfrac{-b + \sqrt{\Delta}}{2 * a} \end{cases}$$

The segment is chosen by having one point inside the sphere and another point outside the sphere. Therefore, only one point of the intersection of the line with the sphere is on the segment. The value of $u$ is checked to be between 0 and 1 and the first $u$ to respect it is chosen, assuming that it is the only point on the segment.

$$0 \le u \le 1, \begin{cases} x = x_1 + u * (x_2 - x_1) \\ y = y_1 + u * (y_2 - y_1) \\ z = z_1 + u * (z_2 - z_1) \end{cases}$$

Plugging back $u$ in the above equations gives the coordinate of the intersecting point.

The function can be written as:

$$intersec(sphere(rR), \overline{P_1P_2})$$

$$= (x_1 + \frac{-b \pm \sqrt{\Delta}}{2 * a} * (x_2 - x_1), \; y_1 + \frac{-b \pm \sqrt{\Delta}}{2 * a} * (y_2 - y_1), \; z_1 + \frac{-b \pm \sqrt{\Delta}}{2 * a}$$

$$* (z_2 - z_1))$$

Where $sphere(R)$ is a sphere of center (0,0,0) and radius R; and $\Delta$ is found as explained in the section above.

The path granularity is important. One end of the segment should be inside of the lookahead sphere and the other end outside of it. This is guaranteed by the path pruning and the lookahead point selection process previously executed. Interpolation is always done on a segment formed by a point within the lookahead radius and a point out of the lookahead radius.

Main control loop

In an embodiment, the main loop is itself divided into three elements used to achieve independent yaw control and the pure-pursuit path following. Firstly, a yaw control loop generates a yaw rate command from the yaw setpoint and current yaw of the drone. In parallel, another control loop computes the vertical velocity command and the horizontal velocity command norm, using the lookahead point previously chosen. Then, the commands are combined using a pure-pursuit algorithm that traces an arc from the drone to the lookahead point according to the horizontal velocity command norm and yaw rate command. The horizontal velocity vector is obtained by computing the tangent vector to the arc with a norm of the commanded horizontal velocity.

Independent yaw control loop

The yaw setpoint, also called heading angle, can come from an external source, a POI (Point Of Interest) on the map, etc. In order to control the heading separately, the yaw rate command $\dot{\psi}_{cmd}$ may be calculated first by using a proportional controller. Particularly, the yaw rate command may be computed from the yaw error $\psi_{error} = \psi_{setpoint} - \psi$ and a given gain parameter $P_{angular}$.

$$\dot{\psi}_{cmd} = \left(\psi_{setpoint} - \psi\right) * P_{angular}$$

3D linear velocities command

The presented control algorithm computes the linear velocities by extending the classic 2D pure-pursuit algorithm to 3D in a way that satisfies multicopter drone dynamics. In the classic 2D pure-pursuit algorithm, an arc A is created that joins the robot and a point on the path. The point on the path, also called lookahead point, is chosen by being the intersection of the path with a circle of a radius of the lookahead distance and centered on the robot. To fully constrain the arc A, the center needs to be on the perpendicular line to the robot forward axis. In 2D, only the rotation around the vertical axis is necessary to follow the arc A. However, following a 3D arc (on a sphere instead of a circle) would require rotation around all 3 axis. In most drones, pitch and roll are already constrained by the linear velocities, and only yaw and yaw rate are controllable in addition to linear velocities.

Therefore, the circle defining the arc A is not augmented to a sphere but to a cylinder, as shown in Fig. 6. Some approaches to convert the controller to 3D simply set another controller (PID for example) to control the vertical position separately and then track the projected path in the 2D plane xy. The approach taken in the present invention is to set the norm of the 3D velocity vector to the desired linear velocity and then obtain the vertical and horizontal components proportionally.

Let $\vec{v} = (v_x, v_y, v_z)^T$ be the desired velocity vector pointing from the origin (the drone). The norm of $\vec{v}$ is set to the desired linear velocity $v_{desired}$ (also referred as cruise velocity):

$$|\vec{v}|^2 = v_x{}^2 + v_y{}^2 + v_z{}^2 = v_{desired}{}^2.$$

The horizontal velocity is the part of the velocity in the plane xy and its norm can be expressed as follow:

$$v_{xy} = \sqrt{\left(v_x^2 + v_y^2\right)}$$

In addition, for the vector to point from the origin to the lookahead point it should respect the following equation.

$$v_z = \frac{h}{r} * v_{xy},$$

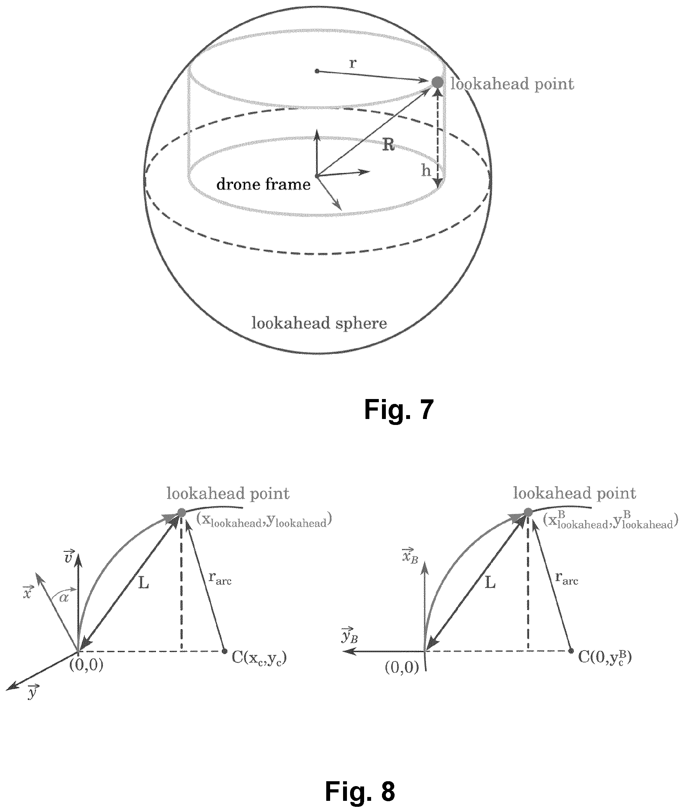

where h is the vertical distance to the lookahead point and r the radius of the projected lookahead circle from slicing circle in sphere with $r = \sqrt{(R^2 - h^2)}$, illustrated by Fig. 7.

Therefore, the following equations are derived to get the values of $v_{xy}$ and $v_x$:

$$v_{xy} = \frac{v_{desired} * r}{\sqrt{(r^2 + h^2)}}$$

$$v_z = \frac{v_{desired} * r}{\sqrt{(r^2 + h^2)}}$$

### Combining linear and angular velocities

The horizontal linear velocity norm and angular velocities obtained previously are then combined within a pure-pursuit algorithm. According to pure-pursuit algorithms existing in the literature, an arc from the drone position to the projected lookahead point in the xy plane needs to be drawn first. In traditional pure-pursuit controllers, the yaw rate command is not controllable and calculated according to the desired linear velocity and lookahead point. In the present invention, the goal is instead to use the yaw rate and linear velocity as given and determine the arc from the drone to the lookahead point that satisfies them both.

Firstly, the curvature $\kappa$ of the arc is obtained by combining the yaw rate command $\dot{\psi}_{cmd}$ and horizontal velocity command norm $v_{xy}$:

$$\kappa = \frac{\dot{\psi}_{cmd}}{v_{xy}}$$

$$r_{arc} = \frac{1}{\kappa} = \frac{v_{xy}}{\dot{\psi}_{cmd}}$$

The curvature thus gives the radius .

The distance to the lookahead point $dist_{2D}(p_{lookahead})$ is checked to be less than twice the radius of the arc. Indeed, if the lookahead point is further away than the diameter of the arc, it is impossible to find an arc that goes from the drone to the lookahead point.

The distance to a point $p_i$ in 2D is given by $dist_{2D}(p_i) = \sqrt{(x - x_i)^2 + (y - y_i)^2}$ where the drone position is $p = (x,y,z)$.

If $dist_{2D}(p_{lookahead}) \geq r_{arc} * 2$, another lookahead point $p_{lookahead}'$ is chosen on the segment $pp_{lookahead}$ such that $dist_{2D}(p_{lookahead}') = r_{arc} * 2$. The point has to respect the following equation: $p_{lookahead}' = j * p_i p_{lookahead}$ with

$$\sqrt{(j * (x_{lookahead} - x)^2 + j * (y_{lookahead} - y)^2)} = r_{arc} * 2$$

The ratio $j$ can be found using $j = \frac{r_{arc} * 2}{dist_{2D}(p_{lookahead})}$, and the point $p_{lookahead}' = (x_{lookahead}', y_{lookahead}')$, $\begin{cases} x_{lookahead}' = j * x_{lookahead} \\ y_{lookahead}' = j * y_{lookahead} \end{cases}$

in the case $dist_{2D}(p_{lookahead}) < r_{arc} * 2$, $p_{lookahead}'$ will be simply equal to $p_{lookahead}$. The coordinates $(x_{lookahead}', y_{lookahead}')$ of $p_{lookahead}'$ can be resumed as follow:

$$x_{lookahead}' = \begin{cases} x_{lookahead}, & dist_{2D}(p_{lookaheah}) < r_{arc} * 2 \\ j * x_{lookahead}, & dist_{2D}(p_{lookaheah}) \geq r_{arc} * 2 \end{cases}$$

$$y_{lookahead}' = \begin{cases} y_{lookahead}, & dist_{2D}(p_{lookaheah}) < r_{arc} * 2 \\ j * y_{lookahead}, & dist_{2D}(p_{lookaheah}) \geq r_{arc} * 2 \end{cases}$$

The arc from the drone to the lookahead point must be tangent to the drone direction of motion in plane xy. Therefore, the angle $\alpha$ between the current velocity vector in the xy plane is used to define a rotated frame $R_B$ (as illustrated in Fig. 8) and to transform the chosen lookahead point in this frame. The transformed point $p_{lookahead}^B =$

$\left(x^B_{lookahead}, y^B_{lookahead}, z^B_{lookahead}\right)$ is defined by:

$$p^B_{lookahead}{}' = R_B p_{lookahead}{}'$$

with:

$$R_B = \begin{bmatrix} cos(\alpha) & sin(\alpha) & 0 \\ -sin(\alpha) & cos(\alpha) & 0 \\ 0 & 0 & 1 \end{bmatrix}$$

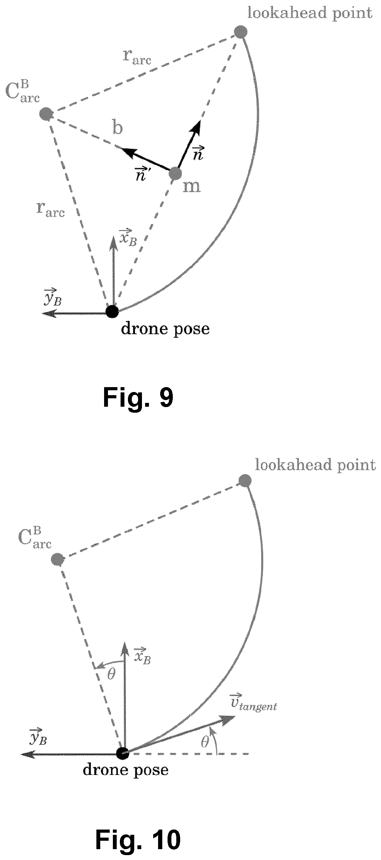

To draw an arc of radius $r_{arc}$ from the drone position to the point $p^B_{lookahead}{}'$, the center point $C^B_{arc}$ of the arc is found first by using the following method illustrated in Fig. 9.

First the distance between the drone position and the lookahead point is given by $dist_{2D}\left(p^B_{lookahead}{}'\right)$. The middle point m between the drone position and the lookahead point in the plane xy is, $m = \left(\frac{x^B_{lookahead'}}{2}, \frac{y^B_{lookahead'}}{2}\right)$ with the drone position being considered the origin 0 = (0,0).

The distance b between the $C^B_{arc}$ and $m$ can be expressed as follow, considering the distance between $C^B_{arc}$ and $p^B_{lookahead}{}'$ to be the radius $r_{arc}$: $b = \sqrt{r^2_{arc} - \frac{dist_{2D}(p^B_{lookahead'})^2}{4}}$.

It is also possible to define the unit vector $\vec{n}$ in the direction $\overrightarrow{Op^B_{lookahead}}$ in the plane xy with $\vec{n} = \left(\frac{x^B_{lookahead'}}{dist_{2D}(p^B_{lookahead'})}, \frac{y^B_{lookahead'}}{dist_{2D}(p^B_{lookahead'})}\right)$. The unit vector rotated by $\frac{\pi}{2}$ is $\vec{n}'$ $\left(\frac{-y^B_{lookahead'}}{dist_{2D}(p^B_{lookahead'})}, \frac{x^B_{lookahead'}}{dist_{2D}(p^B_{lookahead'})}\right)$. The arc center can be found with $C^B_{arc} = m +$ ($\varepsilon$ * b * n') with $\in$ being used to define the rotation direction of the arc $\in = \begin{cases} 1 \ rotation > 0 \\ -1 \ rotation < 0 \end{cases}$.

Therefore, $C^B_{arc} = \left(\frac{x^B_{lookahead'}}{2} - \frac{\epsilon*b*y^B_{lookahead'}}{dist_{2D}(p^B_{lookahead'})}, \frac{y^B_{lookahead'}}{2} + \frac{\epsilon*b*y^B_{lookahead'}}{dist_{2D}(p^B_{lookahead'})}\right)$.

With the center point of the arc $C^B_{arc}$ and the radius $r_{arc}$, it is now possible to find the vector of norm $v_{xy}$ that is tangent to the arc at $0 = (0,0)$ as shown in Fig. 10. The tangent vector is given by $\overrightarrow{v_{tangent}} = (-cos(\theta) * v_{xy}, sin(\theta) * v_{xy})^T$ with $\theta$ being the angle between the x-axis and the vector $\overrightarrow{OC_{arc}}$, obtained from the position of $C^B_{arc} : \theta = atan2\left(\frac{y^B_{C_{arc}}}{x^B_{C_{arc}}}\right)$.

The command vector $\vec{U} = \left(v_x, v_y, v_z, \dot{\psi}_{cmd}\right)^T$ sent to the drone (before applying heuristic regulations and smoothing) is given by:

$$\vec{U} = \begin{pmatrix} -cos(\theta) * v_{xy} \\ sin(\theta) * v_{xy} \\ v_z \\ \dot{\psi}_{cmd} \end{pmatrix}.$$

Heuristics and regulation

The commands computed previously are refined to ensure smooth operation over a greater velocity range. This refinement operation is in two steps: first adjustment of the velocity based on the curvature of the arc from the drone to the lookahead point, and secondly an acceleration-based smoothing.

Curvature of arc

To improve the drone motion on tight curves, the velocity command is reduced on high curvature of the arc going from the drone to the lookahead point to avoid overshooting. This technic already exists in the literature but only with arc in 2D in the xy plane. For the specificity of drone flight, the arc taken in consideration for this velocity regulation is not the previously calculated arc of center $C_{arc}$ and radius $r_{arc}$ in the xy plane, but another arc in 3D to address thigh curve motion vertically as well.

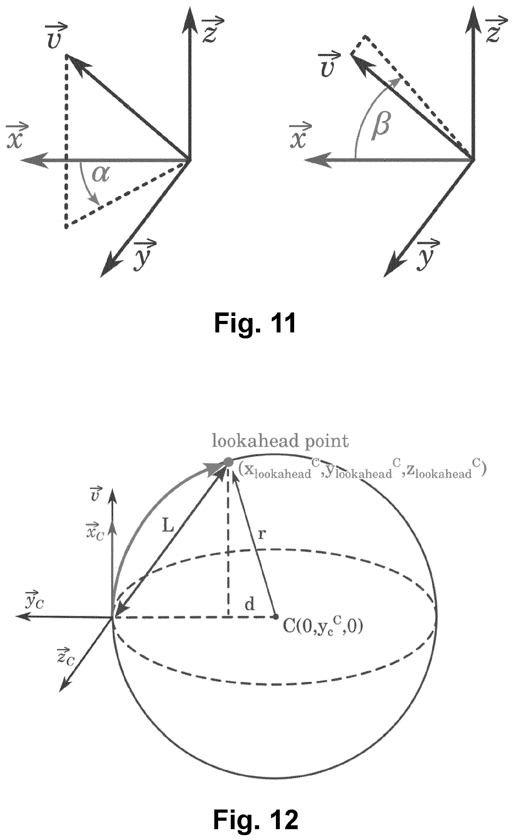

The arc from the drone to the lookahead point must be tangent to the drone direction of motion in 3D. In addition of the previously defined $\alpha$ angle between the current velocity vector in the xy plane, the angle $\beta$ is used to define a rotated frame $R_C$ (Fig. 10) around the y-axis and transform the chosen lookahead point in this frame (as shown in Fig. 11). The transformed point $p^C_{lookahead} = \left( x^C_{lookahead}, y^C_{lookahead}, z^C_{lookahead} \right)$ is defined by $p^C_{lookahead} = R_C p_{lookahead}'$ with:

$$R_C = R_B \begin{bmatrix} cos(\beta) & 0 & -sin(\beta) \\ 0 & 0 & 0 \\ sin(\beta) & 0 & cos(\beta) \end{bmatrix} = \begin{bmatrix} cos(\psi)cos(\beta) & sin(\alpha) & -sin(\beta) \\ -sin(\alpha) & cos(\alpha) & 0 \\ sin(\beta) & 0 & cos(\beta) \end{bmatrix}.$$

The curvature of the 3D arc to the lookahead point $p^C_{lookahead}$ is $K = \dfrac{1}{r_{sphere}^2}$ with $r_{sphere} = \dfrac{D_{lookahead}^2}{2*y^C_{lookahead}}$.

$D_{lookahead}$ is the distance between the drone and the lookahead point $p^C_{lookahead}$ is given by $D_{lookahead} = \sqrt{x^{C}_{lookahead}{}^2 + y^{C}_{lookahead}{}^2 + x^{C}_{lookahead}{}^2}$ with the drone position being the origin $0 = (0,0,0)$.

Therefore, the curvature of the 3D arc can be express as $K = \dfrac{4*y^{C}_{lookahead}{}^2}{D_{lookahead}^4}$.

Let $v'_x$ be the refined horizontal x-axis velocity norm based on curvature, $v'_y$ be the refined horizontal y-axis velocity norm based on curvature and $v'_z$ the refined vertical velocity norm based on curvature. When the curvature is greater than a defined curvature threshold $T_K = \dfrac{1}{T_r}$, with $T_r$ the maximum radius parameter to not consider the curvaturebased velocity adjustment, $v'_x$, $v'_y$ and $v'_z$ are respectively equal to $v_x$, $v_y$ and $v_z$ scaled down linearly according to the 3D arc curvature and $T_r$.

$$v'_x = \begin{cases} v_x & K \leq T_K \\ \dfrac{v_x}{T_r * K} & K > T_K \end{cases}$$

$$v'_y = \begin{cases} v_y & K \leq T_K \\ \dfrac{v_y}{T_r * K} & K > T_K \end{cases}$$

$$v'_z = \begin{cases} v_z & K \leq T_K \\ \dfrac{v_z}{T_r * K} & K > T_K \end{cases}$$

$T_r$ itself is a dynamic value that adapts to the desired velocity of the drone $v_{desired}$. $f$ is the scaling factor to convert velocity to a radius value and $Tr_{min}$ and $Tr_{max}$ are respectively the minimum value and maximum value for $Tc$.

$$T_r = \begin{cases} v_{desired} * f & Tr_{min} < v_{desired} * f < Tr_{max} \\ Tr_{min} & v_{desired} * f < Tr_{min} \\ Tr_{max} & v_{desired} * f > Tr_{max} \end{cases}$$

The last element of the velocity regulation is an acceleration and jerk based smoother to adapt the velocity. Multicopter are subject to higher accelerations than ground robots and the controller should be able to smooth rough velocity commands (generated from highly curved path for example). The smoothing process works in discrete time. The notation q[t] is used to distinguish discrete time quantity. The smoothing process in discrete time can be expressed as the following function:

$$e_{smoothed} = smooth(e[t], e[t-1], a[t-1], dt, D, j_{limit}),$$

where $e_t$ is the velocity input to be smoothed, e[t - 1] is the previous velocity input, a[t - 1] the previous acceleration, $dt$ the time increment between $t$ - 1 and $t$, $D$ the velocity input deadband within which the smoothing process will not apply, $j_{imit}$ the jerk limits.

The function $smooth(e[t], e[t-1], a[t-1], dt, D, j_{limit})$ works by first having the maximum and minimum value for e[t], respectively $e_{max}$ and $e_{min}$ defined.

The value of $e_{max}$ will be the deadband value $D$ if e[t] is within the deadband. Otherwise, it will be calculated depending on the previous acceleration a[t - 1] and the maximum allowed jerk (acceleration variation) $j_{imit}$.

$$e_{max} = \begin{cases} D & -D < e[t] < D \\ e[t-1] + a_{max} * dt & e[t] > D \ \lor \ e[t] < -D \end{cases}$$ with $a_{max} = a[t-1] + \gamma * j_{limit} * dt$, $\gamma$ being used to represent the sign of the previous velocity input e[t - 1]: $\gamma = \begin{cases} 1 & e[t-1] > 0 \\ -1 & e[t-1] < 0 \end{cases}$.

The value of $e_{min}$ will be the deadband value $D$ if e[t] is within the deadband. Otherwise, it will be calculated depending on the previous acceleration a[t - 1] and the maximum allowed jerk (acceleration variation) $j_{limit}$.

$$e_{min} = \begin{cases} -D & -D < e[t] < D \\ e[t-1] - a_{max} * dt & e[t] > D \ \lor \ e[t] < -D \end{cases}$$ with $a_{max} = a[t-1] + \gamma * j_{limit} * dt$, $\gamma$ being used to represent the sign of the previous velocity input e[t - 1]: $\gamma = \begin{cases} 1 & e[t-1] > 0 \\ -1 & e[t-1] < 0 \end{cases}$.

The smoothed velocity input is clamped between the values of $e_{max}$ and $e_{min}$:

$$e_{smoothed} = \begin{cases} e[t] & e_{min} < e[t] < e_{max} \\ e_{min} & e[t] < e_{min} \\ e_{max} & e[t] > e_{max} \end{cases}.$$

The smoother then applies this smoothing functions to all translational velocity command components.

$$U_{smoothed}[t] = \begin{pmatrix} smooth(v'_x[t], v'_x[t-1], a_x[t-1], dt, D_x, j_{limit_x}) \\ smooth(v'_y[t], v'_y[t-1], a_y[t-1], dt, D_y, j_{limit_y}) \\ smooth(v'_z[t], v'_z[t-1], a_z[t-1], dt, D_z, j_{limit_z}) \\ \dot{\psi}_{cmd}[t] = (\psi_{setpoint}[t] - \psi[t]) * P_{angular} \end{pmatrix}$$

with $dt$ the time increment of the controller between t - 1 and $t$; $D_x$, $D_y$, $D_z$ deadband parameters; $j_{limit_x}$, $j_{limit_y}$, $j_{limit_z}$ jerk limit parameters.

$U_{smoothed}$ is the velocity command fed to the drone controller. Most multicopters will provide the capability for velocity command while handling the low-level aspect of the control (individual thrust generation). This approach is a trade-off between full-body control and position control input. Full-body would require a dynamic model of the drone, a long tuning process and a multicopter manufacturer that would allow thrust input commands. Position control input would require virtually no tuning but would not be able to reach high performances, especially with highly curved paths. Velocity command input allows to reach high performance with minimal tuning by taking advantage of the path controller heuristics and regulation capabilities while also relying on the drone manufacturer fine tuning of the low-level thrust control.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

**Claims**

1. A method for controlling multicopter drones, comprising performing by one or more processors the following steps:

   selecting a lookahead point to a multicopter drone on a given 3D path;
   computing an angular yaw velocity command using a given yaw input;
   computing linear horizontal and vertical velocity commands given horizontal and vertical distances to the selected lookahead point and a desired cruise velocity;
   creating an arc going from the multicopter drone to the selected lookahead point by combining the computed angular yaw velocity command with the computed linear horizontal and vertical velocity commands, and computing a velocity vector command using the created arc; and
   refining the computed velocity vector command based on previous computed velocity commands and an allowed maximum acceleration.

2. The method of claim 1, wherein the selecting step is done by relying on a dynamic lookahead distance and by discretizing and pruning the given 3D path.

3. The method of claim 2, wherein the lookahead point being selected by:

   computing a lookahead radius using a velocity of the multicopter drone and a lookahead time parameter;
   looking if all the points of the discretized and pruned 3D path are out of the computed lookahead radius, if so the first point of the pruned path is used as lookahead point $p_{lookahead}$, otherwise, the first point that is out of the lookahead radius is looked for;
   wherein:

      if no point is out of the lookahead radius, the last point of the discretized and pruned 3D path is used as lookahead point,
      if the first point out of lookahead radius is not the first one of the discretized and pruned 3D path, an intersection point of a lookahead sphere with a segment formed by the intersection point and the previous point is used as lookahead, or
      if the first point out of lookahead radius is the first one of the discretized and pruned 3D path, it is used as lookahead point.

4. The method of any one of the previous claims, further comprising projecting the created arc onto a 3D cylinder.

5. The method of any one of the previous claims, wherein the given yaw input comprises a yaw setpoint and a given gain parameter, the yaw setpoint being obtained from an external source or comprising a point of interest.

6. The method of any one of the previous claims, further comprising defining a first rotated frame $R_B$ using an angle a between a velocity vector in a xy plane, and transforming the selected lookahead point to the defined first rotated frame $R_B$.

7. The method of claim 6, further comprising using an angle $\beta$ to define a second rotated frame $R_C$ around a y-axis and, transforming the selected lookahead point to the defined second rotated frame $R_C$.'

8. The method of claim 7, further comprising creating a 3D arc from the multicopter drone to the transformed selected lookahead point, wherein the computed velocity vector command is penalized based on a radius of a sphere derived from the created 3D arc.

9. A system for controlling multicopter drones, comprising a memory and one or more processors, the memory having instructions stored therein, the instructions, when executed by the one or more processors, cause the one or more processors to:

    select a lookahead point to a multicopter drone on a given 3D path;
    compute an angular yaw velocity command using a given yaw input;
    compute linear horizontal and vertical velocity commands given horizontal and vertical distances to the selected lookahead point and a desired cruise velocity;
    create an arc going from the multicopter drone to the selected lookahead point by combining the computed angular yaw velocity command with the computed linear horizontal and vertical velocity commands, and computing a velocity vector command using the created arc; and
    refine the computed velocity vector command based on previous computed velocity commands and an allowed maximum acceleration.

10. A non-transitory computer-readable medium storing computer-executable instructions that upon execution cause one or more processors to:

    select a lookahead point to a multicopter drone on a given 3D path;
    compute an angular yaw velocity command using a given yaw input;
    compute linear horizontal and vertical velocity commands given horizontal and vertical distances to the selected lookahead point and a desired cruise velocity;
    create an arc going from the multicopter drone to the selected lookahead point by combining the computed angular yaw velocity command with the computed linear horizontal and vertical velocity commands, and computing a velocity vector command using the created arc; and
    refine the computed velocity vector command based on previous computed velocity commands and an allowed maximum acceleration.

**Fig. 1**

Fig. 2

Simple case where both previous and next point exists, but only A exists (B is not on the segment). A is used as starting point for pruning.

Simple case where both previous and next point exists, but only B exists (A is not on the segment). B is used as starting point for pruning.

Case where both previous and next point exists, and both A and B exists. The closest of A and B to the robot is used as starting point for pruning.

Case where both previous and next point exists, and neither A and B exists (neither are on their segment). Pi is used as starting point for pruning.

Case where next point exists but not previous (for example when first point of path has not been reached yet). If B is not on segment, Pi is used as starting point for pruning. Otherwise B is used.

Case where previous point exists but not next point (for example when overshooting end of path). If A is not on segment, Pi is used as starting point for pruning. Otherwise A is used

**Fig. 3**

**Fig. 4**

**Fig. 5**

**Fig. 6**

**Fig. 7**

**Fig. 8**

## Fig. 9

## Fig. 10

## Fig. 11

lookahead point
$(x_{lookahead}{}^C, y_{lookahead}{}^C, z_{lookahead}{}^C)$

$C(0, y_c{}^C, 0)$

## Fig. 12

Europäisches
Patentamt

European
Patent Office

Office européen
des brevets

# EUROPEAN SEARCH REPORT

**Application Number**

**EP 23 21 7553**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/064794 A1 (CHEN CHAOBIN [CN]) 28 February 2019 (2019-02-28) | 1,4-10 | INV. G05D1/689 |
| Y | * paragraphs [0092], [0111], [0112], [0121], [0128] – [0130], [0165], [0166], [0180] – [0183], [0205] – [0210], [0235]; figures 3,11,16,23,24 * | 2,3 | G05D1/229 G05D1/646 G05D1/46 |
| Y | US 2010/324812 A1 (SACLE JEROME [FR] ET AL) 23 December 2010 (2010-12-23) * paragraphs [0064] – [0080]; figures 2-7 * | 2,3 | |
| A | DE MEL DANIEL H S ET AL: "Vision-based object path following on a quadcopter for GPS-denied environments", 2017 INTERNATIONAL CONFERENCE ON UNMANNED AIRCRAFT SYSTEMS (ICUAS), IEEE, 13 June 2017 (2017-06-13), pages 456-461, XP033131908, DOI: 10.1109/ICUAS.2017.7991500 [retrieved on 2017-07-25] * the whole document * | 1-10 | |

**TECHNICAL FIELDS SEARCHED (IPC)**

G05D

The present search report has been drawn up for all claims

| Place of search | Date of completion of the search | Examiner |
|---|---|---|
| Munich | 29 April 2024 | Vañó Gea, Joaquín |

EPO FORM 1503 03.82 (P04C01)

## ANNEX TO THE EUROPEAN SEARCH REPORT
## ON EUROPEAN PATENT APPLICATION NO.

EP 23 21 7553

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2024

| Patent document cited in search report | | Publication date | Patent family member(s) | | Publication date |
|---|---|---|---|---|---|
| US 2019064794 | A1 | 28-02-2019 | CN | 108351653 A | 31-07-2018 |
| | | | CN | 115220475 A | 21-10-2022 |
| | | | EP | 3387507 A1 | 17-10-2018 |
| | | | EP | 3971674 A1 | 23-03-2022 |
| | | | EP | 4342792 A2 | 27-03-2024 |
| | | | US | 2019064794 A1 | 28-02-2019 |
| | | | US | 2021072745 A1 | 11-03-2021 |
| | | | WO | 2017096547 A1 | 15-06-2017 |
| US 2010324812 | A1 | 23-12-2010 | FR | 2945622 A1 | 19-11-2010 |
| | | | US | 2010324812 A1 | 23-12-2010 |

EPO FORM P0459

For more details about this annex : see Official Journal of the European Patent Office, No. 12/82